(19) Europäisches Patentamt

European Patent Office

Office européen des brevets

(11) **EP 1 142 164 B1**

(12) **EUROPÄISCHE PATENTSCHRIFT**

(45) Veröffentlichungstag und Bekanntmachung des Hinweises auf die Patenterteilung:
**17.05.2006 Patentblatt 2006/20**

(21) Anmeldenummer: **00960530.4**

(22) Anmeldetag: **26.08.2000**

(51) Int Cl.:
*H04B 10/10* (2006.01)    *H04B 10/152* (2006.01)

(86) Internationale Anmeldenummer:
**PCT/EP2000/008335**

(87) Internationale Veröffentlichungsnummer:
**WO 2001/024414 (05.04.2001 Gazette 2001/14)**

(54) **VERFAHREN ZUR EINSTELLUNG DER ANSTEUERLEISTUNG VON SENDEDIODEN**

METHOD FOR ADJUSTING THE DRIVE POWER OF EMITTING DIODES

PROCEDE DE REGLAGE DE LA PUISSANCE D'EXCITATION DE DIODES EMETTRICES

(84) Benannte Vertragsstaaten:
**AT BE CH CY DE DK ES FI FR GB GR IE IT LI LU MC NL PT SE**

(30) Priorität: **27.09.1999 DE 19946218**

(43) Veröffentlichungstag der Anmeldung:
**10.10.2001 Patentblatt 2001/41**

(73) Patentinhaber:
• **ATMEL Germany GmbH**
  **74072 Heilbronn (DE)**
• **Fraunhofer-Gesellschaft zur Förderung der angewandten Forschung e.V.**
  **80686 München (DE)**

(72) Erfinder:
• **RODENHEBER, Rainer**
  **74078 Heilbronn (DE)**
• **HAUER, Johann**
  **91058 Erlangen (DE)**
• **EGERER, Jens**
  **D-81827 München (DE)**
• **REINHOLD, Michael**
  **91052 Erlangen (DE)**

(56) Entgegenhaltungen:
**EP-A- 0 641 095        WO-A-99/53632
US-A- 5 822 099**

**Beschreibung**

Die vorliegende Erfindung betrifft ein Verfahren zur Einstellung der Ansteuerleistung einer Sendediode für eine Datenübertragung auf optischen Wege, gemäß dem Oberbegriff des Patentanspruchs 1.

Eine Datenübertragung auf optischen Wege, beispielsweise im infraroten Wellenlängenbereich, wird vorzugsweise für kurze Entfernungen, beispielsweise für die Kommunikation von Handies und Notebooks zu Personal Computer (PC) verwendet. Eine weitere Anwendung besteht im Datenaustausch zwischen Drucker und PC. Die Übertragung ist standardisiert und findet in den meisten Fällen bei Systemen die im infraroten Bereich arbeiten, auf der Basis eines sogenannten IrDa Protokolls (IrDa = Infrared Data Association) statt. Da die Datenübertragung bidirektional erfolgt, werden in derartigen Komponenten kombinierte Sende- und Empfangseinheiten, die aus sogenannten Transceiverschaltungen zum Betrieb der Sende- und Empfangsdioden bestehen, verwendet. Die Transceiverschaltungen bestehen ihrerseits aus einer Empfangsschaltung, einer Sendeschaltung, auch Treiberschaltung genannt, und einer Schnittstellenschaltung, die den Datenaustausch zwischen dem Prozessor und der Sende- und Empfangsschaltung regelt. Die zur Datenübertragung benutzten Sendedioden werden von der Treiberschaltung angesteuert, die das digitale Eingangssignal, das über die Schnittstellenschaltung beispielsweise von einem Prozessor geliefert wird, in einen Stromimpuls umsetzt. Je nach Sendeleistung der Sendeeinheit, Charakteristika der Übertragungsstrecke und Empfindlichkeit des Empfängersystems beträgt die Kommunikationsentfernung für eine Datenübertragung im infraroten Bereich zwischen 30 cm und maximal 3 Meter. Durch die Anforderung auch visuelle Information in angemessener Zeit zu übertragen, werden inzwischen Systeme mit Übertragungsraten von 4Mbit/s hergestellt. Da mit höheren Übertragungsraten auch die Anforderungen an die Übertragungsstrecken stark steigen, gibt es beispielsweise im Rahmen des IrDa-Protokolls die Möglichkeit die Datenraten bei ungünstigen Übertragungsbedingungen zu reduzieren.

Bei den nach dem Stand der Technik bekannten Verfahren werden die Sendedioden von den Treiberschaltungen mit festen Stromwerten angesteuert. Diese sind vom Benutzer entweder nicht veränderbar wie der 115,2-kBit/s-Infrarottransceiver HSDL 3201 von Hewlett Packard, oder vom Anwender fest auswählbar wie beim IRMS6100 von Infineon oder vom Anwender fest über einen externen Widerstand einstellbar wie beim TSLM1100 Transceiver von Texas Instruments..

Nachteil des nach dem bisherigen Standes der Technik arbeitenden Verfahren ist, daß die einmal eingestellte Sendeleistung systembedingt fest vorgegeben und vom Benutzter nicht oder nur mit hohem Aufwand, beispielsweise unter Verwendung von externen Bauteilen veränderbar ist. Da bei vielen netzunabhängigen Geräten, wie beispielsweise Handies oder Notebokes der Energieverbrauch eine kritische Größe ist, wird häufig die Kommunikationsentfernung durch eine fest vorgegebene Verringerung der Ansteuerleistung beispielsweise auf Werte unter 1m begrenzt. In Zusammenhang mit der Übertragung immer größeren Datenmengen steigt auch der Energieverbrauch stark an. Da die Akkukapazität der mobilen Geraten sehr beschränkt ist und die Laufzeit gerade bei Notebooks und Handys eine entscheidende Größe ist, sind Wege zu suchen, um den Energieverbrauch bei der infraroten Datenübertragung einerseits gering zu halten, andererseits einen möglichst großen Kommunikationsabstand zu erreichen und gleichzeitig eine Absenkung der Datenraten zu verhindern um auch große Datenmengen schnell zu übertragen.

Die EP 0 641 095 A1 offenbart ein Verfahren und eine Vorrichtung zur optischen Datenübertragung. Gemäß dem dort beschriebenen Verfahren wird die optische Sendeleistung einer ersten Sende- und Empfangseinrichtung durch das Senden von Prüfnachrichten veränderlicher Intensität zu einer zweiten Sende- und Empfangseinrichtung optimiert, indem die erste Sende- und Empfangseinrichtung durch gezieltes Variieren der Intensität der Prüfnachrichten diejenige optimale Sendeleistung ermittelt, bei der die zweite o.g. Einrichtung die Prüfnachricht gerade noch empfängt und entsprechend mit einer Antwortnachricht bestätigt. Vorrichtungstechnisch sieht die EP 0 641 095 A1 zu diesem Zweck eine Anordnung von parallel geschalteten identischen Widerstandselementen mit jeweils einem zugeordneten Schalter vor, sodass durch Öffnen und Schließen einer Kombination von Schaltern eine Abstufung der Amplitude des gesendeten Signals erreichbar ist.

Beim Gegenstand der EP 0 641 095 A1 ist insbesondere als nachteilig anzusehen, dass prinzipiell nur eine abgestufte Veränderung der Sendeleistung möglich ist, wobei zudem verfeinerte Abstufungen mit einem großen schaltungstechnischen Aufwand und entsprechenden Fertigungskosten einher gehen.

Der Erfindung liegt die Aufgabe zugrunde, eine Vorrichtung zum Liefern eines einstellbaren Treiberstroms für ein elektronisches Datenübertragungsbauglied anzugeben, mit der sich in Abhängigkeit von einem Datenübertragungsabstand die Ansteuerleistung des Datenübertragungsbauglieds stufenlos einstellen lässt. Eine weitere Aufgabe der Erfindung besteht darin, eine entsprechende Vorrichtung anzugeben, die sich einfach und kostengünstig herstellen lässt.

Diese Aufgaben werden durch die erfindungsgemäße Treiberschaltung gemäß dem unabhängigen Patentanspruch 1 sowie durch die Schaltungsanordnung gemäß Anspruch 17 bzw. die Datenübertragungssysteme gemäß den Ansprüchen 19 und 20 gelöst. Günstige Ausgestaltungsformen sind jeweils Gegenstand von Unteransprüchen.

Hiernach besteht das Wesen der Erfindung darin, die Ansteuerleistung einer Sendediode von einer ersten Sende- und Empfangseinheit, die ein Prüfsignal aussendet, solange zu verändem, bis mit der aktuell eingestellten Ansteuerleistung von einer zweiten Sende- und Empfangseinheit ein Antwortsignal empfangen wird. Ist dies der Fall, wird von der ersten Sende- und Empfangseinheit der Wert der Ansteuerleistung gespeichert Eine nachfolgende Datenübertragung wird vorzugsweise mit dem zuletzt gespeicherten Wert der Ansteuerleistung durchgeführt.

Untersuchungen der Anmelderin haben gezeigt, daß es vorteilhaft ist, wenn der Wert der eingestellten Ansteuerleistung erst dann geändert wird, wenn innerhalb eines Zeitfensters, das mit dem Aussenden des Prüfsignals beginnt, kein Antwortsignal empfangen wird. In einem darauffolgenden Zeitfenster wird dann ein Prüfsignal mit veränderter Ansteuerleistung ausgesandt.

In einer Weiterbildung des erfindungsgemäßen Verfahrens wird bereits zu Beginn geprüft, ob bei den vorliegenden Übertragungsbedingungen, gegeben durch die Systemanordnung, eine Datenübertragung möglich ist. Hierzu wird während des ersten Zeitfensters das Prüfsignal mit der maximaler Ansteuerleistung ausgesendet und sofern ein Antwortsignal empfangen wird, in nachfolgenden Zeitfenstern die Ansteuerleistung sukzessive reduziert. Vorteilhaft gegenüber dem bisherigen Stand der Technik ist, dass mit einem geringen zeitlichen Mehraufwand erheblich weniger Energie für die Datenübertragung benötigt wird.

In einer anderen Weiterbildung des erfindungsgemäßen Verfahrens, wird während des ersten Zeitfensters das Prüfsignal mit einer minimalen Ansteuerleistung ausgesandt und die Ansteuerleistung sukzessive mit jedem weiteren Zeitfenster erhöht, bis ein Antwortsignal empfangen wird. Wird zusätzlich das Antwortsignal mit maximaler Sendeleistung zurückgesandt, lassen sich damit die Übertragungseigenschaften des Rücksendepfads ausblenden.

Um den Energieverbrauch während der Einstellphase gering zu halten, ist es vorteilhaft als Prüfsignals ein sich zeitlich veränderliches Signal zu erzeugen, indem die Sendediode mit möglichst kurzen Impulsen angesteuert wird. Ferner ist es vorteilhaft die Einstellung der Ansteuerleistung bei längerer Datenübertragung oder bei einer Unterbrechung der Datenübertragung erneut durchzuführen, indem das Prüfsignal mit dem zuletzt abgespeicherten Wert der Ansteuerleistung erzeugt wird.

Untersuchungen der Anmelderin haben gezeigt, dass es für die Änderung der Ansteuerleistung vorteilhaft ist, wenn in der Sende- und Empfangseinheit, die aus einer Schnittstellenschaltung, einer Empfangsschaltung und einer Treiberschaltung besteht, von der TreiberSchaltung der Strom durch die Sendediode, im folgenden Treiberstrom genannt, variiert wird.

Hierzu lasst sich die vorliegende neue Schaltungsanordnung in vorteilhafter Weise zur Umsetzung des erfindungsgemäßen Verfahrens verwenden. Sie schafft eine Treiberschaltung zum Liefern eines Treiberstromes zu einem elektronischen Datenübertragungsbauglied, wie beispielsweise einer Sendediode, mit folgenden Merkmalen: einer Schalteinrichtung, die in einem ersten Zustand einen Schaltungsknoten mit einer Versorgungsspannung verbindet und von einer Referenzstromquelle trennt, und in einem zweiten Zustand den Schaltungsknoten von der Versorgungsspannungsquelle trennt und mit einer konstanten Referenzstromquelle verbindet; einem spannungsgesteuerten Widerstand, dessen Steuereingang mit dem Schaltungsknoten verbunden ist; und einem spannungsgesteuerten Meßwiderstand, an dessen Eingang die Versorgungsspannung anliegt, dessen Ausgang einen Meßstrom liefert, der zu dem Treiberstrom ein vorgegebenes Verhältnis aufweist, und dessen Steuereingang mit dem Schaltungsknoten verbunden ist, wobei der Meßstrom mit einem zu dem konstanten Referenzstrom umgekehrten Vorzeichen zu dem Schaltungsknoten gekoppelt wird.

Der Vorteil der Treiberschaltung gemäß der zweitgenannten Aufgabe der vorliegenden Erfindung gegenüber dem Stand der Technik besteht darin, daß dieselbe eine Einstellbarkeit der Höhe der Stromimpulse und eine hohe Datenrate bei hohen Strömen ermöglicht. So können beispielsweise genaue Stromimpulse mit einstellbarem oder programmierbarem Strom, bei einer hohen Datenübertragungsrate von mehreren MBit/s erzeugt werden. Durch diese Einstellbarkeit ist es möglich, die minimal notwendige Stromstärke für die aktuelle Übertragungsstrecke zu nutzen, um somit einerseits lange Wege zu überbrücken und andererseits den Stromverbrauch zu minimieren, und damit die Batterielebensdauer zu erhöhen. Vorteilhaft ist weiterhin, daß der Verbraucher gegen Masse geschaltet werden kann.

Insbesondere wird dies durch einen Meßtransistor und einen Ausgangstransistor erreicht, die so geschaltet sind, dass der Ausgangsstrom, der durch den Ausgangstransistor fließt, ein festes Vielfaches des Stroms, der durch den Messtransistor fließt. Der Steuereingang beider Transistoren ist mit einem gemeinsamen Knoten verbunden, der von dem Referenzstrom entladen und dem Strom, der durch den Messtransistor fließt, geladen wird. In einem eingeschwungenen Zustand wird somit der Ausgangsstrom auf ein festes Vielfaches des Referenzstroms geregelt.

Bei einem Ausführungsbeispiel wird die Treiberschaltung für eine Infrarotsendediode für eine drahtlose Kommunikation nach dem IrDA-Standard verwendet, wobei die Treiberschaltung in einer CMOS-Technologie implementiert ist. Als spannungsgesteuerte Messwiderstände werden MOS-Transistoren verwendet, derart, dass der Strom, der durch den spannungsgesteuerten Widerstand fließt, ein festes Vielfaches des Stroms ist, der durch den spannungsgesteuerten Messwiderstand fließt, wobei das Verhältnis zwischen diesen beiden Strömen durch das Verhältnis der Transistorweiten der beiden spannungsgesteuerten Widerstände beim Schaltungsentwurf einstellbar ist. Zudem wird der Messstrom über zwei in Reihe geschaltete Stromspiegel zu dem Schaltungsknoten, der mit den Steueranschlüssen der beiden Transistoren verbunden ist, gekoppelt, so dass eine Spannungsentkopplung zwischen dem Messtransistor und dem Schaltungsknoten erreicht wird.

Während bei der beschriebenen Treiberschaltung der Treiberstrom über den Referenzstrom eingestellt wird, können alternativ mehrere erfindungsgemäße Treiberschaltungen verwendet werden, um zusätzlich oder alternativ zu dem Variieren des eingespeisten Referenzstroms den Treiberstrom durch zu- oder abschalten der Treiberschaltungen, deren Ausgänge für eine Stromaddition zusammengeschaltet sind, und die jeweils einen festen Treiberstrom liefern, einzustellen. Eine solche Schaltungsanordnung ist vorteilhaft, da durch die Aufteilung der Treiberstufe in identische Blöcke das Einschaltverhalten bzw. die Geschwindigkeit im wesentlichen von den Technologie- und Betriebs-Parametern abhängen und nicht vom eingestellten Strom.

Die Vorteile der vorliegenden Erfindung bestehen ferner darin, dass durch die erfindungsgemäße Treiberschaltung ein schneller, geregelter Treiberstrom erzeugt werden kann, und dass der Treiberstrom lediglich geringfügig von Änderungen der anliegenden Versorgungsspannung, von Temperaturänderungen und von Technologieschwankungen abhängt.

Nachfolgend wird die Erfindung anhand bevorzugter Ausführungsbeispiele bezugnehmend auf die Zeichnungen dargestellt und näher erläutert. Es zeigen:

Fig. 1 Eine optisches Datenübertragungssystem, mit zwei Sende- und Empfangseinheiten und einem Blockschaltbild einer Transceiverschaltung, und

Fig. 2 ein Schaltbild einer erfindungsgemäßen Treiberschaltung für den Einsatz in einem Ausführungsbeispiel gemäß Fig. 1; und

Fig. 3 ein Blockschaltbild einer weiteren erfindungsgemäßen Treiberschaltung, bestehend aus mehreren in Fig. 2 dargestellten und ausgangsseitig parallelgeschalteten Treiberschaltungen.

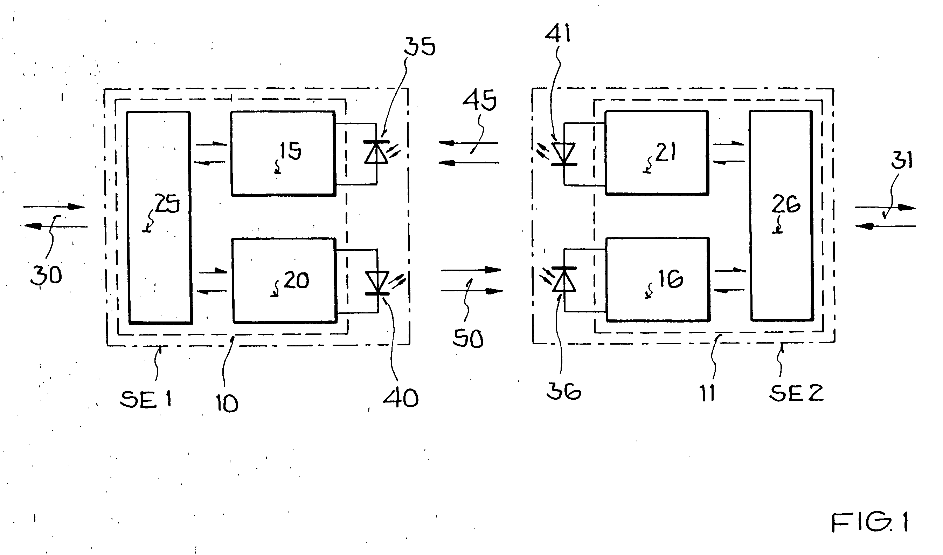

Die Aufgabe der in Figur 1 abgebildeten Sende- und Empfangseinheiten SE1 und SE2 ist es, Daten im optischen Bereich über kurze Entfernungen auszutauschen. Hierzu ist eine erste Sende- und Empfangseinheit SE1, beispielsweise in einem Handy oder Notebook eingebaut und eine zweite Sende- und Empfangseinheit SE2, beispielsweise in einem PC integriert. Entsprechend dem erfindungsgemäßen Verfahren wird vor der Datenübertragung mittels eines Prüfsignals, die für die jeweilige Entfernung notwendige Ansteuerleistung eingestellt.
Beide Sende- und Empfangseinheiten SE1 und SE2 beinhalten jeweils eine integrierte Transceiverschaltung 10 bzw. 11 und jeweils eine Sendediode 40 bzw 41 und jeweils eine Empfangsdiode 35 bzw 36. Die Transceiverschaltungen 10 bzw 11, bestehen aus einer Empfangsschaltung 15 bzw 16, einer Treiberschaltung 20 bzw 21 und einer Schnittstellenschaltung 25 bzw 26. Die Schnittstellenschaltungen 25 bzw 26 sind einerseits mit einem Prozessor (nicht gezeigt), um Eingangs/Ausgangs-Signale 30 bzw 31 auszutauschen, und andererseits mit den Empfangsschaltungen 15 bzw 16 und mit den Treiberschaltungen 20 bzw 21 verbunden. An die Empfangsschaltungen 15 bzw 16 sind die Empfängerdioden 35 bzw 36 angeschlossen, die empfangene Lichtimpulse 45 in Stromimpulse umwandeln. An die Treiberschaltungen 20 bzw 21 sind die Sendedioden 40 bzw 41 angeschlossen, die Stromimpulse in Lichtimpulse 46 umwandeln.
Die Aufgabe der ersten Sende- und Empfangschaltung SE1 ist es, vor der Datenübertragung ein Prüfsignal auszusenden, indem die Sendediode 40 von der Treiberschaltung 20 mittels eines kurzen Stromimpulses angesteuert wird, und anschließend innerhalb eines vorgegeben Zeitfenster auf ein Antwortsignal in der Empfangsschaltung 15 wartet. Ferner wird die Höhe des Stromimpulses des ausgesandten Prüfsignals in der Treiberschaltung 20 gespeichert. Im weiteren Ablauf lassen sich 2 Fälle unterscheiden:

Fall 1: Das ausgesandte Prüfsignal wird in der Empfangsschaltung 16 in Verbindung mit der Empfangsdiode 36 in ein elektrisches Signal umgesetzt und in Folge wird von der Schnittstellenschaltung 26 die Treiberschaltung 21 veranlaßt, mittels eines Stromimpulses durch die Sendediode 41, ein Antwortsignal zurückzusenden. Wird in der Empfangsschaltung 15 ein Antwortsignal dedektiert, wird über die Schnittstellenschaltung 25 der Prozessor (nicht gezeigt) veranlaßt, die zu übertragenden Daten über die Schnittstellenschaltung 25 an die Treiberschaltung 20 bereitzustellen. Die Treiberschaltung 20 setzt den Datenstrom über Stromimpulse mittels Sendediode 40 in optische Signale um, wobei die Höhe der Stromimpulse dem zuletzt abgespeicherten Wert des Ansteuerstroms beim Aussenden des Prüfsignals entspricht.

Fall 2: Sofern im vorgegeben Zeitfenster kein Antwortsignal in der Empfangschaltung 15 dedektiert wird, veranlaßt die Schnittstellenschaltung 25 in einem weiteren Zeitfenster die Treiberschaltung 20 mittels einem nächst höheren Stromwert durch die Sendediode 40 ein weiteres Prüfsignal auszusenden. Dieser Vorgang wird wiederholt bis ein Antwortsignal in der Empfangsschaltung 15 dedektiert wird.

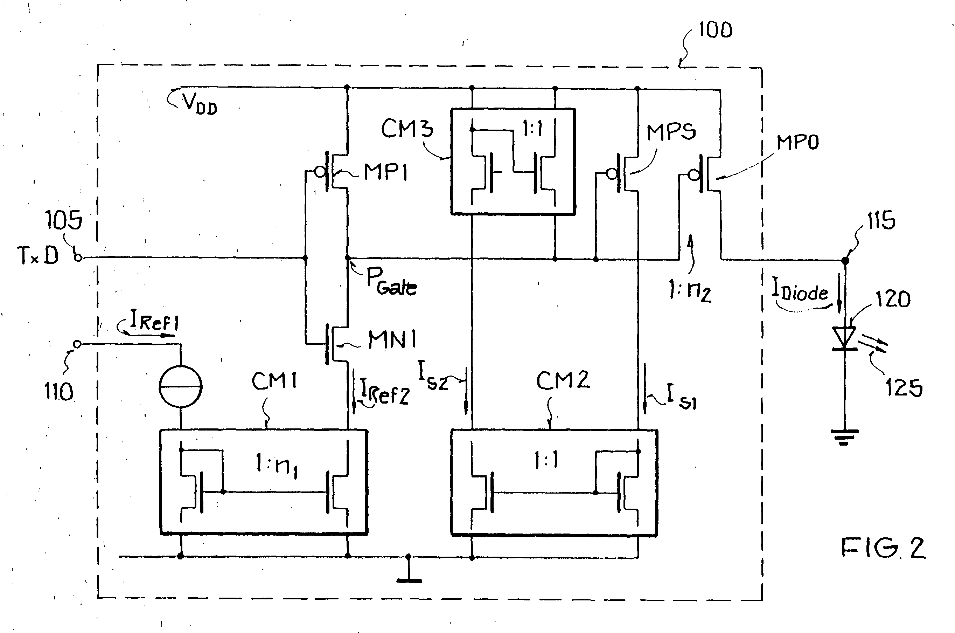

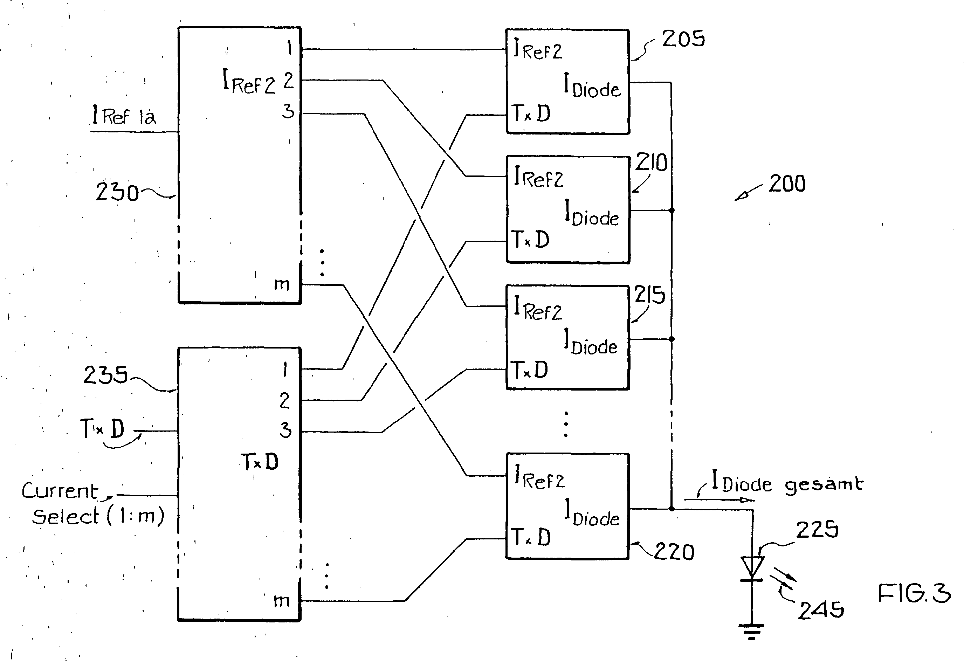

Die im folgenden dargestellten Schaltuhgsteile der Figuren 2 und 3 beziehen sich auf den Sendeteil der integrierten Transceiverschaltung 10, d.h. die Treiberschaltung 20. Dabei sorgt die Treiberschaltung 20 dafür, dass genaue Stromimpulse mit programmierbarem, d.h. einstellbarem, Strom bei einer hohen Datenübertragung von mehreren MBit/s erzeugt werden können. Dabei ist es erst durch die Programmierbarkeit der Stromimpulse möglich, die minimal notwendige Stromstärke für die aktuelle Übertragungsstrecke wie in Fig 1 abgebildet, zu ermitteln, um somit den Stromverbrauch zu minimieren. Hierdurch kann beispielsweise die Batterielebensdauer erhöht werden, falls die Transceiverschaltung 10 in einem batteriebetriebenen Gerät eingesetzt wird.

Fig. 2 zeigt ein Schaltbild einer Treiberschaltung 100, die beispielsweise in einer CMOS-Technologie implementiert ist. Die Treiberschaltung 100 weist einen ersten Eingangsanschluss 105, an dem ein digitales Eingangssignal TxD (Transmit-Data-Signal) anliegt, einen zweiten Eingangsanschluss 110, an dem ein erster Referenzstrom $I_{Ref1}$ anliegt, und einen Ausgangsanschluss 115 auf, an dem der Treiberstrom $I_{Diode}$ ausgegeben wird. Die Treiberschaltung 100 weist ferner eine Schalteinrichtung MN1, MP1, einen Messtransistor MPs, einen Ausgangstransistor MP0 und drei Stromspiegel CM1, CM2 und CM3 auf. Sowohl der Messtransistor MPS als auch der Ausgangstransistor MP0 sind bei dem dargestellten Ausführungsbeispiel PMOS-Transistoren bzw. p-Kanal-MOSFETs, an deren Source-Anschluß eine Versorgungsspannung $V_{DD}$ anliegt.

Der Drain-Anschluß des Ausgangstransistors MP0 ist mit dem Ausgang 115 der Treiberschaltung 100 verbunden. Der Gate-Anschluß von sowohl dem Messtransistor MPS als auch von dem Ausgangstransistor MPO sind mit einem Schaltungsknoten PGate verbunden. Der Drain-Anschluß des Messtransistors MPS ist zur Spannungsentkopplung über die zwei Stromspiegel CM2, CM3 mit dem Schaltungsknoten PGate verbunden. Die oben genannte Schalteinrichtung besteht aus einem PMOS-Transistor MP1 und einem NMOS-Transistor MN1, deren Gate-Anschluß mit dem ersten Eingangsanschluß 105 verbunden sind. Während der PMOS-Transistor MP1 der Schalteinrichtung zwischen die Versorgungsspannung $V_{DD}$ und den Schaltungsknoten PGate geschaltet ist, ist der NMOS-Transistor MN1 der Schaltungseinrichtung zwischen den Schaltungsknoten PGate und den Stromspiegel CM1 geschaltet, der wiederum zwischen den zweiten Eingangsanschluß 110 und den NMOS-Transistor MN1 geschaltet ist. Während die Stromspiegel CM1, CM2 mit Masse verbunden sind, ist der Stromspiegel CM3 mit der Versorgungsspannung $V_{DD}$ verbunden. Wie es in Fig. 2 zu sehen ist, ist der Anodenanschluß einer Infrarotsendediode 120 mit dem Ausgangsanschluß 115 der Treiberschaltung 100 verbunden, wobei der Kathodenanschluß derselben auf Masse geschaltet ist.

Im folgenden wird nun die Funktionsweise der Treiberschaltung 100 erläutert, die einen genauen Stromimpuls $I_{Diode}$ einer programmierbaren Höhe zu der Sendediode 120 liefern soll, so daß dieselbe Lichtimpulse 125 mit einer entsprechenden programmierten Intensität erzeugt.

Der dem zweiten Eingang 110 der Treiberschaltung 100 eingespeiste erste Referenzstrom $I_{Ref1}$, der beispielsweise 12,5 $\mu$A betragen kann, wird durch den Stromspiegel CM1 um $n_1$ verstärkt, wie es in Fig. 2 durch das angegebene Verhältnis "1:$n_1$" gezeigt ist. Wenn sich das Eingangssignal TxD an dem ersten Eingang 105 der Treiberschaltung 100 in einem niedrigeren Zustand befindet (d.h. TxD = 0), ist der NMOS-Transistor MN1 ausgeschaltet und der PMOS-Transistor MP1 eingeschaltet. Folglich wird in diesem Zustand der Schaltungsknoten PGate auf der Spannung $V_{DD}$ gehalten. Falls das Eingangssignal TxD für einen Sendeimpuls in einen hohen Zustand übergeht (TxD = 1), wird der PMOS-Transistor MP1 ausgeschaltet und der NMOS-Transistor MN1 eingeschaltet, wobei der durch den Stromspiegel CM1 verstärkte Referenzstrom $I_{Ref2}$ den Knoten PGate entlädt. Durch diese Entladung sinkt die Spannung des Schaltungsknotens PGate so lange, bis die Transistoren MPO und MPS eingeschaltet werden. Durch die Verschaltung der Transistoren MPS und MPO auf die dargestellte und oben beschriebene Weise, weisen der Treiberstrom, der durch den Ausgangstransistor MPO fließt, und der Meßstrom, der durch den Meßtransistor MPS fließt, ein festes Verhältnis 1:$n_2$ zueinander auf. Dieses Verhältnis ist im wesentlichen durch das Verhältnis der Transistorweiten der beiden PMOS-Transistoren MPO und MPS bestimmt. Es gilt:

$$W_{MPO}/W_{MPS} = n_2/1 \qquad (1)$$

Bei Gleichung (1) gibt $W_{MPO}$ die Transistorweite des PMOS-Transistors MPO, $W_{MPS}$ die Transistorweite des PMOS-Transistors MPS und $n_2$ das Verstärkungsverhältnis zwischen den beiden PMOS-Transistoren MPO und MPS an.

Folglich liefert der Meßtransistor MPS an seinem Drain-Anschluß einen Messstrom $I_{S1}$, der mit dem Treiberstrom $I_{Diode}$ gemäß folgender Gleichung zusammenhängt:

$$I_{S1} = I_{Diode}/n_2 \qquad (2)$$

Der Messstrom $I_{S1}$ wird durch Spiegelung mit den Stromspiegeln CM2 und CM3 in den Schaltungsknoten PGate eingespeist. Folglich wird der Schaltungsknoten PGate während des Sendens (TxD = 1) durch einen konstanten Strom $I_{Ref2}$ entladen und durch einen zu dem Treiberstrom $I_{Diode}$ proportionalen Strom $I_{S2}$ geladen. Erreicht der Treiberstrom $I_{Diode}$ den Sollwert (d.h. $I_{Ref2} \cdot n_2$), so ist der Messstrom $I_{S1}$ gleich dem Referenzstrom $I_{Ref2}$, und die Spannung $V_{PGate}$ an dem Schaltungsknoten PGate erreicht einen festen Spannungswert, da der Lade- und Entlade-Strom von/zu dem Schaltungsknoten PGate gleich groß sind. Folglich wird in einem eingeschwungenen Zustand der Treiberstrom durch die Rückkopplung auf den Sollwert $I_{Ref1} \cdot n_1 \cdot n_2$ geregelt. Somit erreicht auch der Treiberstrom $I_{Diode}$ einen festen Wert, und eventuelle Änderungen durch Schwankungen der Temperatur oder der Versorgungsspannung werden ausgeglichen. Schwankungen der Technologieparameter werden ebenfalls ausgeglichen, da die verwendeten Stromspiegel CM2 und CM3 nicht von den Technologieparametern abhängig sind.

Am Ende eines Sendeimpulses, d.h. wenn das Eingangssignal TxD in den niedrigen Zustand übergeht (TxD = 0), wird der Transistor MN1 ausgeschaltet und der PMOS-Transistor MP1 eingeschaltet. Dadurch wird die Spannung $V_{PGate}$ an dem. Schaltungsknoten PGate auf die Versorgungsspannung $V_{DD}$ gezogen, wodurch der Treiberstrom $I_{Diode}$ sicher ausgeschaltet wird. Der Messtransistor MPS wird ebenfalls ausgeschaltet, wodurch die gesamte Rückkopplung ausgeschaltet wird. Folglich verbraucht die Treiberschaltung 100 abgesehen von Leckströmen an den Transistoren im ausgeschalteten Zustand keinen Versorgungsstrom, der durch die Versorgungsspannung $V_{DD}$ geliefert wird, mehr.

Es wird darauf hingewiesen, daß die Dotierungspegel der Transistoren und die Polung der Treiberspannungen vertauscht sein können.

In Fig. 3 ist ein Blockschaltbild einer Schaltungsanordnung 200, die aus einer Mehrzahl in Fig. 2 dargestellten Treiberschaltungen besteht, gezeigt. Während bei der Schaltung von Fig. 2 der Treiberschaltung $I_{Diode}$ stufenlos durch Variieren des eingespeisten ersten Referenzstroms $I_{Ref1}$ programmiert wird, kann der Treiberstrom $I_{DiodeGesamt}$ bei der in Fig. 3 gezeigten Schaltungsanordnung dadurch programmiert werden, daß mehrere Treiberschaltungen wie diejenigen von Fig. 2, deren Ausgänge verbunden sind, je nach Bedarf zu- oder abgeschaltet werden. Zusätzlich sind auch hier die durch die einzelnen Treiberschaltungen gelieferten Treiberströme $I_{Diode}$ über den Referenzstrom einstellbar.

Die Schaltung 200 weist als Treiberstufe mehrere identische Treiberschaltungsblöcke 205, 210, 215 und 220 auf, die der Schaltung von Fig. 2 bis auf das Fehlen des ersten Stromspiegels CM1 entsprechen, d.h. bei denen der zweite Referenzstrom $I_{Ref2}$ direkt eingespeist wird. In Fig. 3 sind vier Treiberschaltungsblöcke 205, 210, 215 und 220 gezeigt, wobei jedoch eine beliebige Anzahl m von Treiberschaltungsblöcken vorgesehen sein kann. Die Ausgänge der Treiberschaltungsblöcke 205 - 220 sind für die Stromaddition zusammengeschaltet, um den Treiberstrom $I_{DiodeGesamt}$ zu liefern, der zu einer Sendediode 225 gekoppelt wird. Die Treiberschaltungsblöcke 205 - 220 liefern jeweils einen festen Treiberstrom $I_{Diode}$.

Die Schaltungsanordnung 200 weist ferner einen Referenzstromblock 230 und einen Digitalansteuerungsblock 235 auf. Beide Blöcke 230 und 235 weisen ebenso viele Ausgänge auf, wie Treiberschaltungsblöcke 205 - 220 vorhanden sind. Jeder Ausgang des Referenzstromblocks 230 ist mit einem entsprechenden zweiten Eingang 110 (siehe Fig. 2) eines Treiberschaltungsblocks 205 - 220 verbunden, während jeder Ausgang des Digitalansteuerungsblocks 235 mit einem entsprechenden ersten Eingang 105 (siehe Fig. 2) eines Treiberschaltungsblocks 205 bis 220 verbunden ist. Der Referenzstromblock 230 empfängt ein Eingangssignal $I_{Refla}$ für einen Programmierungsreferenzstrom an einem Eingang. Der Digitalansteuerungsblock 235 empfängt das Eingangssignal TxD und ein Stromauswahlsignal CS (Current-Select-Signal), das die (1 bis m, bzw. "1:m") Treiberschaltungsblöcke 205 - 220 bestimmt, die zu- bzw. abgeschaltet werden sollen, an zwei Eingängen. Das Summentreibersignal $I_{DiodeGesamt}$, das sich aus allen Treibersignalen $I_{Diode}$ aller Treiberschaltungsblöcke 205 - 220 additiv zusammensetzt, wird der Sendediode 225 für ein Sendesignal 245 zugeführt.

Im folgenden wird nun die Funktionsweise der Schaltung 200 von Fig. 3 erklärt. Die mehreren Treiberschaltungsblöcke 205 - 220 liefern jeweils einen festen Treiberstrom $I_{Diode}$ von beispielsweise 50 mA. Zu diesem Zweck versorgt der Referenzstromblock 230 abhängig von dem Referenzstrom $I_{Ref1a}$ alle Treiberschaltungsblöcke mit einem festen, gleichen Referenzstrom $OI_{Ref2}$. Je nach gewünschtem Stromwert werden dann über das Stromauswahlsignal CS durch den Digitalansteuerungsblock 235 eine, mehrere oder alle Treiberschaltungsblöcke 205 - 220 eingeschaltet, entsprechend einer digitalen Decodierung in dem Digitalansteuerungsblock 235. Folglich kann über das Stromauswahlsignal eine geeignete Anzahl von Treiberschaltungsblöcken 205 - 220 eingeschaltet werden, um der Sendediode 225 ein Treibersignal $I_{DiodeGesamt}$ mit einer geeigneten Höhe zuzuführen, das der Summe der einzelnen Treiberströme $I_{Diode}$ der eingeschalteten Treiberschaltungsblöcke entspricht. Liegen beispielsweise acht Treiberschaltungsblöcke vor, kann somit ein Treiberstrom $I_{DiodeGesamt}$ von 50, 100, 150, ... 400 mA eingestellt werden.

Es sei darauf hingewiesen, daß es nicht wesentlich ist, ob die Referenzströme $I_{Ref2}$ für die Treiberschaltungsblöcke 205 - 220 gleich hoch sind, sofern dies bezüglich des Stromauswahlsignals CS und der Decodierung in dem Digitalansteuerungsblock berücksichtigt ist. Ferner können mehrere Treiberschaltungsblöcke an ihrem ersten Eingang zusammengeschaltet sein, so daß dieselben gleichzeitig zu- und abgeschaltet werden.

Es wird darauf hingewiesen, daß, obwohl in den vorhergehenden Zeichnungen und in der vorhergehenden Beschreibung spezielle Ausführungsbeispiele und spezielle Realisierungen derselben gezeigt wurden, die wesentlichen Merkmale der Treiberschaltung gemäß der vorliegenden Erfindung anders realisiert sein können. Es können beispielsweise die verwendeten Stromspiegel in der Treiberschaltung anders realisiert sein, und die zwei Stromspiegel, die verwendet werden, um den Messstrom in den Schaltungsknoten PGate einzuspeisen, können durch andere Schaltelemente ersetzt werden, um eine Spannungsentkopplung zwischen dem Ausgang des Messtransistors MPS und dem Schaltungsknoten PGate zu erreichen.

Es sei darauf hingewiesen, dass die vorliegende Erfindung ferner bei anderen elektronischen Datenübertragungsbaugliedern anwendbar ist, bei denen Stromimpulse verwendet werden, wie z.B. bei einer drahtgebundenen Datenübertragung.

**Patentansprüche**

1. Treiberschaltung (20, 100) zum Liefern eines einstellbaren Treiberstroms ($I_{Diode}$) für ein elektronisches Datenübertragungsbauglied (40, 120) einer ersten Sende- und Empfangseinheit (SE1) für eine Datenübertragung von der ersten Sende- und Empfangseinheit (SE1) zu einer zweiten Sende- und Empfangseinheit (SE2) nach Maßgabe eines Referenzstroms ($I_{Ref2}$), mit:

   • einer Schalteinrichtung (MP1, MN1), die in einem ersten Zustand einen Schaltungsknoten (PGate) mit einer Versorgungsspannung ($V_{DD}$) verbindet und von dem Referenzstrom ($I_{Ref2}$) trennt, und in einem zweiten Zustand den Schaltungsknoten (PGate) von der Versorgungsspannung ($V_{DD}$) trennt und mit dem Referenzstrom ($I_{Ref2}$) verbindet;
   • einem spannungsgesteuerten Widerstand (MPO), an dessen Eingang die Versorgungsspannung ($V_{DD}$) anliegt, dessen Ausgang den Treiberstrom ($I_{Diode}$) liefert, und dessen Steuereingang mit dem Schaltungsknoten (PGate) verbunden ist; und
   • einem spannungsgesteuerten Messwiderstand (MPS), an dessen Eingang die Versorgungsspannung ($V_{DD}$) anliegt, dessen Ausgang einen Messstrom ($I_{S1}$) liefert, der zu dem Treiberstrom ($I_{Diode}$) ein vorgegebenes Verhältnis aufweist, und dessen Steuereingang mit dem Schaltungsknoten (PGate) verbunden ist, wobei der Messstrom ($I_{S1}$) mit einem zu dem Referenzstrom ($I_{Ref2}$) umgekehrten Vorzeichen zu dem Schaltungsknoten (PGate) gekoppelt wird.

2. Treiberschaltung (20, 100) nach Anspruch 1, **dadurch gekennzeichnet, dass** die Treiberschaltung (20, 100) zum Speichern des jeweils eingestellten Werts des Treiberstroms ($I_{Diode}$) ausgebildet ist.

3. Treiberschaltung (20, 100) nach Anspruch 1 oder 2, **dadurch gekennzeichnet, dass** die Treiberschaltung (20, 100) zum Ansteuern des Datenübertragungsbauglieds (40, 120) mittels eines kurzen Stromimpulses zum Aussenden eines Prüfsignals vor der Datenübertragung ausgebildet ist, wobei die Treiberschaltung (20, 100) vor der Datenübertragung zumindest während eines Zeitfensters mit einer Empfangsschaltung (15) zum Empfangen eines Antwortsignals der zweiten Sende- und Empfangseinheit (SE2) auf das Prüfsignal in signaltechnischer Wirkverbindung steht und wobei bei erfolgter Detektion des Antwortsignals in der Empfangsschaltung (15) der Treiberstrom ($I_{Diode}$) für die Datenübertragung zu der zweiten Sende- und Empfangseinheit (SE2) dem zuletzt abgespeicherten Wert des Treiberstroms beim Aussenden des Prüfsignals entspricht, oder wobei bei ausbleibender Detektion des Antwortsignals in der Empfangsschaltung (15) der Treiberstrom ($I_{Diode}$) durch Anpassen des Referenzstroms ($I_{Ref2}$) bis zur Detektion des Antwortsignals in der Empfangsschaltung (15) veränderbar ist.

4. Treiberschaltung (100) nach einem der Ansprüche 1 bis 3, **dadurch gekennzeichnet, dass** das elektronische Datenübertragungsbauglied (120) eine Infrarotsendediode (120) ist.

5. Treiberschaltung (100) nach einem der vorhergehenden Ansprüche, **dadurch gekennzeichnet, dass** die Schalteinrichtung (MP1, MN1) aus einem NMOS- und einem PMOS-Transistor besteht, von denen einer (MP-1) zwischen den Schaltungsknoten (PGate) und die Versorgungsspannung ($V_{DD}$), und einer (MN1) zwischen den Schaltungsknoten (PGate) und den Referenzstrom ($I_{Ref2}$) geschaltet ist, wobei an dem Gateanschluß beider Transistoren (MP1, MN1) das Eingangssignal (TxD) anliegt.

6. Treiberschaltung (100) nach Anspruch 5, **dadurch gekennzeichnet, dass** die Schalteinrichtung (MP1, MN1) ein digitales Eingangssignal (TxD) empfängt, und **dass** der erste Zustand einem niedrigen Zustand des Eingangssignals (TxD) und der zweite Zustand einem hohen Zustand des Eingangssignals (TXD) entspricht, wobei der PMOS-Transistor (MP1) zwischen den Schaltungsknoten (PGate) und die Versorgungsspannung ($V_{DD}$) geschaltet ist, und der NMOS-Transistor (MN1) zwischen den Schaltungsknoten (PGate) und den Referenzstrom ($I_{Ref2}$) geschaltet ist.

7. Treiberschaltung (100) nach einem der vorhergehenden Ansprüche, **dadurch gekennzeichnet, dass** der Referenzstrom ($I_{Ref2}$) durch einen Stromspiegel (CM1) eingeprägt wird.

8. Treiberschaltung (100) nach Anspruch 7, **dadurch gekennzeichnet, dass** der Stromspiegel (CM1) einen Vorreferenzstrom ($I_{Ref1}$) verstärkt, um den Referenzstrom ($I_{Ref2}$) zu liefern.

9. Treiberschaltung (100) nach einem der vorhergehenden Ansprüche, **dadurch gekennzeichnet, dass** der spannungsgesteuerte Widerstand (MPO) ein MOS-Transistor ist.

10. Treiberschaltung (100) nach einem der vorhergehenden Ansprüche, **dadurch gekennzeichnet, dass** der spannungsgesteuerte Messwiderstand (MPS) ein MOS-Transistor ist.

11. Treiberschaltung (100) nach einem der vorhergehenden Ansprüche, **dadurch gekennzeichnet, dass** in dem zweiten Zustand der Treiberstrom ($I_{Diode}$) ein Vielfaches des Messstroms ($I_{S1}$) beträgt, wobei das Verhältnis der beiden Ströme durch das Verhältnis der Transistorweiten der beiden spannungsgesteuerten Widerstände (MPO, MPS) eingestellt ist.

12. Treiberschaltung (100) nach einem der vorhergehenden Ansprüche, **dadurch gekennzeichnet, dass** der Messstrom ($I_{S1}$) über zwei in Reihe geschaltete Stromspiegel (CM2, CM3) zu dem Schaltungsknoten (PGate) gekoppelt wird.

13. Treiberschaltung (100) nach einem der vorhergehenden Ansprüche, **dadurch gekennzeichnet, dass** der Treiberstrom ($I_{Diode}$) über den Referenzstrom ($I_{Ref2}$) stufenlos einstellbar ist, wobei der Treiberstrom ($I_{Diode}$) in dem zweiten Zustand ein festes Vielfaches des Referenzstroms ($I_{Ref2}$) beträgt.

14. Treiberschaltung (100) nach einem der Ansprüche 1 bis 13, **dadurch gekennzeichnet, dass** das Datenübertragungsbauglied (120) zwischen dem Ausgang des spannungsgesteuerten Widerstands (MPO) und Masse geschaltet ist.

15. Treiberschaltung (100) nach einem der vorhergehenden Ansprüche, **dadurch gekennzeichnet, dass** die Treiberschaltung (100) in einer CMOS-Technologie implementiert ist.

16. Treiberschaltung (100) nach einem der vorhergehenden Ansprüche, **dadurch gekennzeichnet, dass** die Versorgungsspannung (VDD) ungeregelt ist.

17. Schaltungsanordnung (200), **gekennzeichnet durch**

   • mehrere Treiberschaltungen (205 - 220) nach einem der Ansprüche 1 bis 16, deren Ausgänge, an denen die Treiberströme ($I_{Diode}$) geliefert werden, verbunden sind, um einen Gesamttreiberstrom ($I_{DiodeGesamt}$) zu liefern;
   • eine Referenzstromeinstelleinrichtung (230), die alle Treiberschaltungen (205 - 220) mit getrennten Referenzströmen ($I_{Ref2}$) versorgt; und
   • eine Digitalansteuerungseinrichtung (235), die abhängig von einer gewünschten Treiberstromstärke eine bestimmte Anzahl von Treiberschaltungen (205 - 220) zu- oder abschaltet.

18. Schaltungsanordnung (200) nach Anspruch 15, **dadurch gekennzeichnet, dass** die getrennten Referenzströme ($I_{Ref2}$) identisch sind.

19. Datenübertragungssystem mit:

   • einer ersten Sende- und Empfangseinheit (SE1) zum Senden der Daten, die wenigstens ein Datenübertragungsbauglied (40, 120) und eine Empfangsschaltung (15) aufweist;
   • einer zweiten Sende- und Empfangseinheit (SE2) zum Empfangen der Daten; und
   • einer Treiberschaltung (20, 100) nach einem der Ansprüche 1 bis 16;
   • wobei das Datenübertragungssystem weiterhin Mittel zum Variieren des Referenzstroms ($I_{Ref2}$) aufweist.

20. Datenübertragungssystem mit:

   • einer ersten Sende- und Empfangseinheit (SE1) zum Senden der Daten, die wenigstens ein Datenübertragungsbauglied (225) und eine Empfangsschaltung (15) aufweist;
   • einer zweiten Sende- und Empfangseinheit (SE2) zum Empfangen der Daten; und
   • einer Schaltungsanordnung (200) nach Anspruch 17 oder 18;

• wobei das Datenübertragungssystem weiterhin Mittel zum Variieren des Referenzstroms ($I_{Ref2}$) aufweist.

**Claims**

1. Driver circuit (20, 100) for supplying an adjustable driver current ($I_{Diode}$) for an electronic data transmission component (40, 120) of a first transmitting and receiving unit (SE1) for data transmission from the first transmitting and receiving unit (SE1) to a second transmitting and receiving unit (SE2) according to a reference current ($I_{Ref2}$), with:

    - a switching device (MP1, MN1) which in a first state connects a circuit junction (PGate) with a supply voltage ($V_{DD}$) and separates it from the reference current ($I_{Ref2}$) and in a second state separates the circuit junction (PGate) from the supply voltage ($V_{DD}$) and connects it with the reference current ($I_{Ref2}$);
    - a voltage-controlled resistor (MPO), to the input of which the supply voltage ($V_{DD}$) is applied and the output of which delivers the driver current ($I_{Diode}$), the control input of the resistor being connected with the circuit junction (PGate); and
    - a voltage-controlled measuring resistor (MPS), to the input of which the supply voltage ($V_{DD}$) is applied and the output of which supplies a measuring current ($I_{S1}$) having a predetermined ratio to the driver current ($I_{Diode}$), the control input of the measuring resistor being connected with the circuit junction (PGate), wherein the measuring current ($I_{S1}$) is coupled to the circuit junction (PGate) with a sign inverted with respect to the reference current ($I_{Ref2}$).

2. Driver circuit (20, 100) according to claim 1, **characterised in that** the driver circuit (20, 100) is constructed for storing the respectively set value of the driver current ($I_{Diode}$).

3. Driver circuit (20, 100) according to claim 1 or 2, **characterised in that** the driver circuit (20, 100) is constructed for drive control of the data transmission component (40, 120) by means of a short current pulse for transmission of a check signal prior to the data transmission, wherein the driver circuit (20, 100) prior to the data transmission is operatively connected in terms of signal at least during a time window with a receiving circuit (15) for reception of a response signal of the second transmitting and receiving unit (SE2) to the check signal and wherein in the case of detection of the response signal in the receiving circuit (15) the driver current ($I_{Diode}$) for the data transmission to the second transmitting and receiving unit (SE2) corresponds with the last stored value of the driver current on transmission of the check signal, or wherein in the absence of detection of the response signal in the receiving circuit (15) the driver current ($I_{Diode}$) is variable by adaptation of the reference current ($I_{Ref2}$) until detection of the response signal in the receiving circuit (15).

4. Driver circuit (100) according to one of claims 1 to 3, **characterised in that** the electronic data transmission component (120) is an infrared emitting diode (120).

5. Driver circuit (100) according to one of the preceding claims, **characterised in that** the switching device (MP1, MN1) consists of an NMOS transistor and a PMOS transistor, of which one switching device (MP1) is connected between the circuit junction (PGate) and the supply voltage ($V_{DD}$) and one switching device (MN1) is connected between the circuit junction (PGate) and the reference current ($I_{Ref2}$), wherein the input signal (TxD) is applied to the gate terminal of the two transistors (MP1, MN1).

6. Driver circuit (100) according to claim 5, **characterised in that** the switching device (MP1, MN1) receives a digital input signal (TxD) and that the first state corresponds with a low state of the input signal (TxD) and the second state with a high state of the input signal (TxD), wherein the PMOS transistor (MP1) is connected between the circuit junction (PGate) and the supply voltage ($V_{DD}$) and the NMOS transistor (MN1) is connected between the circuit junction (PGate) and the reference current ($I_{Ref2}$).

7. Driver circuit (100) according to one of the preceding claims, **characterised in that** a current mirror (CM1) is imposed on the reference current (IRef2).

8. Driver circuit (100) according to claim 7, **characterised in that** the current mirror (CM1) amplifies a pre-reference current ($I_{Ref1}$) in order to supply the reference current ($I_{Ref2}$).

9. Driver circuit (100) according to one of the preceding claims, **characterised in that** the voltage-controlled resistor (MPO) is an MOS transistor.

**10.** Driver circuit (100) according to one of the preceding claims, **characterised in that** the voltage-controlled measuring resistor (MPS) is an MOS transistor.

**11.** Driver circuit (100) according to one of the preceding claims, **characterised in that** in the second state the driver current ($I_{Diode}$) amounts to a multiple of the measuring current ($I_{S1}$), wherein the ratio of the two currents is set by the ratio of the transistor widths of the two voltage-controlled resistors (MPO, MPS).

**12.** Driver circuit (100) according to one of the preceding claims, **characterised in that** the measuring current ($I_{S1}$) is coupled to the circuit junction (PGate) by way of two current mirrors (CM2, CM3) connected in series.

**13.** Driver circuit (100) according to one of the preceding claims, **characterised in that** the driver current ($I_{Diode}$) is steplessly settable by way of the reference current ($I_{Ref2}$), wherein the driver current ($I_{Diode}$) in the second state amounts to a fixed multiple of the reference current ($I_{Ref2}$).

**14.** Driver circuit (100) according to one of claims 1 to 13, **characterised in that** the data transmission component (120) is connected between the output of the voltage-controlled resistor (MPO) and ground.

**15.** Driver circuit (100) according to one of the preceding claims, **characterised in that** the driver circuit (100) is implemented in CMOS technology.

**16.** Driver circuit (100) according to one of the preceding claims, **characterised in that** the supply voltage (VDD) is unregulated.

**17.** Circuit arrangement (200), **characterised by**:

- several driver circuits (205 to 220) according to one of claims 1 to 16, the outputs of which - at which the driver currents ($I_{Diode}$) are supplied - are connected in order to supply a total driver current ($I_{DiodeGesamt}$);
- a reference current setting device (230) supplying all driver circuits (205 to 220) with separate reference currents ($I_{Ref2}$); and
- a digital drive control device (235) switching on or off a determined number of driver circuits (205 to 220) depending on a desired driver current strength.

**18.** Circuit arrangement (200) according to claim 15, **characterised in that** the separate reference currents ($I_{Ref2}$) are identical.

**19.** Data transmission system with:

- a first transmitting and receiving unit (SE1) for transmitting data, which comprises at least one data transmission component (40, 120) and a receiving circuit (15);
- a second transmitting and receiving unit (SE2) for receiving the data; and
- a driver circuit (20, 100) according to one of claims 1 to 16;
- wherein the data transmission system additionally comprises means for varying the reference current ($I_{Ref2}$).

**20.** Data transmission system with:

- a first transmitting and receiving unit (SE1) for transmitting data, which comprises at least one data transmission component (225) and a receiving circuit (15);
- a second transmitting and receiving unit (SE2) for receiving the data; and
- a driver circuit (200) according to claim 17 or 18;
- wherein the data transmission system additionally comprises means for varying the reference current ($I_{Ref2}$).

**Revendications**

**1.** Circuit d'attaque (20, 100) pour la délivrance d'un courant d'attaque ($I_{Diode}$) à un composant électronique de transmission de données (40, 120) d'une première unité d'émission-réception (SE1) pour une transmission de données de la première unité d'émission-réception (SE1) à une deuxième unité d'émission-réception (SE2) en fonction d'un courant de référence ($I_{Ref2}$), comprenant :

. un circuit (MP1, MN1) qui dans un premier état relie un noeud de circuit (PGate) à une tension d'alimentation ($V_{DD}$) et l'isole du courant de référence ($1_{Ref2}$), et dans un deuxième état isole le noeud de circuit (PGate) de la tension d'alimentation ($V_{DD}$) et le relie au courant de référence ($I_{Ref2}$) ;

. une résistance (MPO) commandée en tension, à l'entrée de laquelle est appliquée la tension d'alimentation ($V_{DD}$), dont la sortie fournit le courant d'attaque ($I_{Diode}$), et dont l'entrée de commande est reliée au noeud de circuit (PGate), et

. une résistance de mesure (MPS) commandée en tension, à l'entrée de laquelle est appliquée la tension d'alimentation ($V_{DD}$), dont la sortie fournit un courant de mesure ($I_{S1}$) présentant un rapport prédéfini avec le courant d'attaque ($I_{Diode}$), et dont l'entrée de commande est reliée au noeud de circuit (PGate), le courant de mesure ($I_{S1}$) étant couplé au noeud de circuit (PGate) selon une polarité contraire à celle du courant de référence ($I_{Ref2}$).

2. Circuit d'attaque (20, 100) selon la revendication 1, **caractérisé en ce que** le circuit d'attaque (20, 100) est conçu pour mémoriser chacune des valeurs réglées du courant d'attaque ($I_{Diode}$).

3. Circuit d'attaque (20, 100) selon la revendication 1 ou 2, **caractérisé en ce que** le circuit d'attaque (20, 100) est conçu pour commander le composant de transmission de données (40, 120) au moyen d'une courte impulsion de courant pour l'émission d'un signal d'essai avant la transmission des données, circuit dans lequel le circuit d'attaque (20, 100) est en liaison active par signaux, avant la transmission des données, au moins durant une fenêtre temporelle, avec un circuit de réception (15) pour recevoir un signal de réponse de la deuxième unité d'émission-réception (SE2) suite au signal d'essai, et dans lequel, une fois la détection du signal de réponse dans le circuit de réception (15) effectuée, le courant d'attaque ($I_{Diode}$) pour la transmission de données vers la deuxième unité d'émission-réception (SE2) correspond à la valeur du courant d'attaque mémorisée en dernier lors de l'émission du signal d'essai, ou dans lequel lorsque la détection du signal de réponse dans le circuit de réception (15) n'est pas effectuée, le courant d'attaque ($I_{Diode}$) peut être modifié par adaptation du courant de référence ($I_{Ref2}$) jusqu'à la détection du signal de réponse dans le circuit de réception (15).

4. Circuit d'attaque (100) selon l'une quelconque des revendications 1 à 3, **caractérisé en ce que** le composant électronique de transmission de données (120) est une diode d'émission en infrarouge (120).

5. Circuit d'attaque (100) selon l'une quelconque des revendications précédentes, **caractérisé en ce que** le dispositif de circuit (MP1, MN1) consiste en un transistor NMOS et un transistor PMOS, dont l'un (MP1) est monté entre le noeud de circuit (PGate) et la tension d'alimentation ($V_{DD}$), et l'autre (MN1) est monté entre le noeud de circuit (PGate) et le courant de référence ($I_{Ref2}$), le signal d'entrée (TxD) étant appliqué à la grille des deux transistors (MP1, MN1).

6. Circuit d'attaque (100) selon la revendication 5, **caractérisé en ce que** le dispositif de circuit (MP1, MN1) reçoit un signal d'entrée (TxD) digital, et **en ce que** le premier état correspond à un état bas du signal d'entrée (TxD) et le deuxième état à un état élevé du signal d'entrée (TXD), le transistor PMOS (MP1) étant monté entre le noeud de circuit (PGate) et la tension d'alimentation ($V_{DD}$), et le transistor NMOS (MN1) entre le noeud de circuit (PGate) et le courant de référence ($I_{Ref2}$).

7. Circuit d'attaque (100) selon l'une quelconque des revendications précédentes, **caractérisé en ce que** le courant de référence ($I_{Ref2}$) est appliqué par un miroir de courant (CM1).

8. Circuit d'attaque (100) selon la revendication 7, **caractérisé en ce que** le miroir de courant (CM1) amplifie un courant de préréférence ($I_{Ref1}$) pour fournir le courant de référence ($I_{Ref2}$).

9. Circuit d'attaque (100) selon l'une quelconque des revendications précédentes, **caractérisé en ce que** la résistance (MPO) commandée en tension est un transistor MOS.

10. Circuit d'attaque (100) selon l'une quelconque des revendications précédentes, **caractérisé en ce que** la résistance de mesure (MPS) commandée en tension est un transistor MOS.

11. Circuit d'attaque (100) selon l'une quelconque des revendications précédentes, **caractérisé en ce que** dans le deuxième état, le courant d'attaque ($I_{Diode}$) correspond à un multiple du courant de mesure ($I_{S1}$), le rapport des deux courants étant réglé par le rapport des caractéristiques des transistors des deux résistances (MPO, MPS) commandées en tension.

**12.** Circuit d'attaque (100) selon l'une quelconque des revendications précédentes, **caractérisé en ce que** le courant de mesure ($I_{S1}$) est couplé au noeud de circuit (PGate) par l'intermédiaire de deux miroirs de courant (CM2, CM3) montés en série.

**13.** Circuit d'attaque (100) selon l'une quelconque des revendications précédentes, **caractérisé en ce que** le courant d'attaque ($I_{Diode}$) peut être réglé de manière continue à travers le courant de référence ($I_{Ref2}$), le courant d'attaque ($I_{Diode}$) dans le deuxième état correspondant à un multiple entier du courant de référence ($I_{Ref2}$).

**14.** Circuit d'attaque (100) selon l'une quelconque des revendications 1 à 13, **caractérisé en ce que** le composant de transmission de données (120) est monté entre la sortie de la résistance (MPO) commandée en tension et la masse.

**15.** Circuit d'attaque (100) selon l'une quelconque des revendications précédentes, **caractérisé en ce que** le circuit d'attaque (100) est mis en oeuvre dans le cadre d'une technologie CMOS.

**16.** Circuit d'attaque (100) selon l'une quelconque des revendications précédentes, **caractérisé en ce que** la tension d'alimentation ($V_{DD}$) n'est pas réglée.

**17.** Dispositif de circuit (200), **caractérisé par**

. plusieurs circuits d'attaque (205-220) selon l'une quelconque des revendications 1 à 16, dont les sorties, au niveau desquelles sont délivrés les courants d'attaque ($I_{Diode}$), sont reliées pour délivrer un courant d'attaque commun ($I_{DiodeGesamt}$) ;
. un dispositif de réglage du courant de référence (230) qui alimente tous les circuits d'attaque (205-220) en courants de référence ($I_{Ref2}$) séparés ; et
. un système de commande digital (235), qui commute en ou hors fonctionnement un certain nombre de circuits d'attaque (205-220) en fonction d'une intensité de courant d'attaque souhaitée.

**18.** Dispositif de circuit (200) selon la revendication 15, **caractérisé en ce que** les courants de référence ($I_{Ref2}$) séparés sont identiques.

**19.** Système de transmission de données comprenant :

. une première unité d'émission-réception (SE1) pour l'envoi des données, qui présente au moins un composant de transmission de données (40, 120) et un circuit de réception (15) ;
. une deuxième unité d'émission-réception (SE2) pour la réception des données ; et
. un circuit d'attaque (20, 100) selon l'une quelconque des revendications 1 à 16,
. le système de transmission de données présentant en outre des moyens de variation du courant de référence ($I_{Ref2}$).

**20.** Système de transmission de données comprenant :

. une première unité d'émission-réception (SE1) pour l'envoi des données, présentant au moins un composant de transmission de données (225) et un circuit de réception (15) ;
. une deuxième unité d'émission-réception (SE2) pour la réception des données ; et
. un dispositif de circuit (200) selon la revendication 17 ou 18 ;
. le système de transmission de données présentant en outre des moyens de variation du courant de référence ($I_{Ref2}$).

FIG 1

FIG. 2

FIG.3